# EUROPÄISCHE PATENTSCHRIFT

(11) **EP 2 819 914 B1**
(45) Veröffentlichungstag und Bekanntmachung des Hinweises auf die Patenterteilung: **19.07.2017**
(21) Anmeldenummer: 13713730.3
(22) Anmeldetag: 28.02.2013
(51) Int. Cl.: B62J 6/06

(54) **FAHRRADDYNAMO**
BICYCLE DYNAMO
DYNAMO D'ÉCLAIRAGE DE BICYCLETTE

(30) Priorität: 28.02.2012 DE 102012003944
(43) Veröffentlichungstag der Anmeldung: 07.01.2015
(73) Patentinhaber: Velogical Engineering GmbH, 51065 Köln (DE)
(72) Erfinder: FRIEDEN, Peter, 51065 Köln (DE)
(74) Vertreter: Lippert Stachow Patentanwälte Rechtsanwälte
(86) Internationale Anmeldenummer: PCT/EP2013/000575
(87) Internationale Veröffentlichungsnummer: WO 2013/127525

(56) Entgegenhaltungen:
- DE-A1- 19 545 680
- DE-U1- 9 400 018
- JP-U- S6 294 987
- JP-U- S6 311 287
- JP-U- S6 313 390
- JP-U- S6 365 584

## Beschreibung

Die Erfindung betrifft einen Fahrraddynamo mit einem Außenläufer, der innenseitig mehrere Permanentmagnete trägt, die in der inneren stationären Statorwicklung eine elektrische Spannung erzeugen. Aus der DE9400018U ist ein Fahrraddynamo mit den Merkmalen des Oberbegriffes des Anspruchs 1 bekannt. Der bekannte Seitendynamo ist bei Fahrrädern die am weitesten verbreitete Bauart und wurde in seinem mechanischen und elektrischen Aufbau speziell für den Betrieb von Glühbirnen entwickelt. Da deren Lichtausbeute bei Unterspannung dramatisch abfällt und ihr Glühfaden bei Überspannung schnell durchbrennt, wurde in der Mitte des vergangenen Jahrhunderts in der deutschen Straßenverkehrs-Zulassungsordnung (StVZO) eine Leistungscharakteristik festgelegt, die den direkten Anschluss von Glühbirnen ermöglicht, deren Einhaltung aber einen hohen Preis hat:
- der Dynamo ist mechanisch extrem hoch übersetzt (d. h. hohe Drehzahl im Verhältnis zur Fahrgeschwindigkeit), um auch bei niedrigem Tempo ausreichende Leistung zu erzeugen. Bei hohem Tempo ist er sehr laut.
- In den magnetischen Kreis sind absichtlich hohe Wirbelstromverluste hineinkonstruiert, um bei wachsendem Tempo die Ausgangsspannung zu drosseln. Der somit systembedingt sehr niedrige Wirkungsgrad erfordert nicht nur viel Bauvolumen und Gewicht, sondern auch eine sehr hohe mechanische Antriebsleistung mit entsprechend großer Bremswirkung.
- Selbst hoher Anpressdruck am Reifen und die Riffelung in der Reifenflanke reichen zur Übertragung der hohen Umfangskraft kaum aus. Schon geringe Verschmutzung oder Nässe lassen den Dynamo durchrutschen.

Um eine sichere Funktion bei schlechtem Wetter zu gewährleisten ist man vor einigen Jahren dazu übergegangen, Alltagsräder serienmäßig mit Nabendynamos auszustatten. Zwar ist es mit modernen Magnetwerkstoffen hoher Flussdichte möglich, Bauvolumen und Gewicht in erträglichen Grenzen zu halten, aber mit einem Leistungsgewicht von ca. 400 g/3W = 133 kg/kW liegt er weiter unter allen technologischen Maßstäben. Das liegt weniger an der Konstruktion selbst, sondern an der Gesetzmäßigkeit, dass die Leistung aller Elektromaschinen mit der Drehzahl steigt - oder eben abfällt. Die vermeintlichen Vorteile des Nabendynamos sind auch gleichzeitig seine Nachteile: Er ist im Vorderrad eingespeicht, kann also nur mit hohem Aufwand und oft auch gar nicht nachgerüstet werden. Er dreht nur mit Radfrequenz und für eine Elektromaschine damit viel zu langsam, ist folglich schwer und zu teuer und vor allem: Er dreht sich immer mit und erzeugt zusätzliche Reibung, selbst wenn er nicht gebraucht wird.

Im Radsport konnte sich der Nabendynamo aus oben genannten Gründen bislang kaum etablieren, sondern hier haben sich - wenn überhaupt - abnehmbare, akkubetriebene Beleuchtungssysteme durchgesetzt. Außer dem immer noch relativ hohen Gewicht belasten die Akkus die Umwelt.

Eine zu dieser Erfindung im Ansatz ähnlicher Lösungsweg wird in der DE 195 45 680 A1 beschrieben: So wie im Elektromaschinenbau üblich handelt es sich um eine Drehstrommaschine mit geschichteten dünnen Dynamoblechen zur Minimierung der Wirbelstromverluste. Damit das Gesamtsystem funktioniert, gibt es eine klare Funktionstrennung zwischen Stromerzeugung (mit optimalem Wirkungsgrad) und verlustarmer elektronischer Leistungsregelung. Da dieser Dynamo über ein Reibrad am Reifen angetrieben wird und starke Permanentmagnete am Läufer hat, war eine Minimierung des magnetischen Rastmoments erforderlich, d. h. eine abweichende Anzahl von Magneten und Nuten. Der Dynamo ist als Innenläufer ausgeführt und wenn die Magnete aus fertigungstechnischen Gründen nur eingeklebt sind, ist er nur begrenzt drehzahlfest: Er kann sich selbst zerstören, wenn die Fliehkräfte die Magnete aus ihrer Verankerung reißen. Nachteilig ist weiterhin das ungünstige Radienverhältnis zwischen dem Luftspalt und der Außenkontur des Gehäuses.

Um eine für diese Bauart ausreichend hohe Drehzahl bzw. ein hohes Übersetzungsverhältnis zu ermöglichen, sollte der Reibraddurchmesser den des Luftspalts möglichst wenig übertreffen. Durch die exzentrische Lagerung der Reibradachse wird dieser Aspekt zwar berücksichtigt, allerdings auf Kosten einer Konstruktion, die nicht nur recht aufwändig, sondern wegen der trockenen und hochtourig laufenden Verzahnung auf Dauer recht störanfällig sein könnte. Da die Platine mit Gleichrichter und elektronischer Leistungs-/Spannungsregelung direkt im Dynamogehäuse untergebracht und auf diesen Dynamo maßgeschneidert ist, macht hier nur die Drehstromvariante Sinn, denn nur so lassen sich die höchstmöglichen Wirkungsgrade erzielen.

Beim ökologischen Umbau unserer Verkehrssysteme wird dem Fahrrad in Zukunft eine wachsende Rolle zukommen. Daher ist es wichtig, alle Möglichkeiten zu nutzen, das Radfahren attraktiver, d. h. sicherer, schneller, komfortabler und möglichst auch noch billiger zu machen. Im Bereich der Fahrradbeleuchtung und insbesondere beim Dynamo bieten sich bisher noch ungenutzte Möglichkeiten.

Die Aufgabe dieser Erfindung besteht darin, einen konstruktiv einfachen FahrradDynamo zu bauen, der
- einen Maximalwirkungsgrad von über 60 % haben sollte,
- bei normaler Geschwindigkeit weniger als 1 Newton Fahrwiderstand bzw. Bremswirkung erzeugen sollte (entspricht einer Steigung von ca. 1:900),
- mit möglichst unter 60 g nur etwa ein Viertel des Gewichts von Seitendynamos und nur ein Achtel von Nabendynamos haben sollte,
- auch bei Regen, Nässe und in mäßigem Schnee nicht durchrutscht,
- geräusch- und verschleißarm auch im Dauerbetrieb arbeiten kann,
- mechanisch und elektrisch Geschwindigkeiten bis 100 km/h ertragen kann,
- wegklappbar ist und durch ein flexibles Befestigungssystem an jegliche Fahrradtypen und HPV-Sonderkonstruktionen angepasst werden kann,
- zur Herstellung nur eine minimale Menge an teuren Rohstoffen (Kupfer, seltene Erden etc.) benötigt, was eine preiswerte Massenfertigung ermöglicht.

Die Aufgabe wird erfindungsgemäß dadurch gelöst, dass der zylindrische Außenmantel des Außenläufers einen elastischen Ring trägt zur reibschlüssigen Anlage an der Felge des Fahrrad-Rades. Hierbei ist besonders vorteilhaft, wenn der Außenmantel eine koaxiale Ringnut aufweist oder mit einem den Außenmantel abschließenden Rotordeckel bildet, in der der elastische Ring insbesondere ein O-Ring einliegt und gegenüber dem Außenmantel nur wenig vorsteht.

Weitere vorteilhafte Ausgestaltungen sind in den weiteren Unteransprüchen aufgeführt.

Ein wichtiger Gedanke dieser Erfindung besteht darin, durch ausschließliche Verwendung von LED-Leuchtmitteln und eine klare Funktionstrennung zwischen Stromerzeugung und -regelung den Gesamtwirkungsgrad der Beleuchtungsanlage (insbesondere den des Dynamos) soweit zu verbessern, dass mit deutlich kleineren Übertragungskräften zwischen Laufrad und Dynamo genügend Leistung für eine komfortable und sichere Beleuchtung übertragen wird. Obwohl die Felgenflanke wegen ihrer glatten Oberfläche bislang ungeeignet erschien, eröffnet sich dann nämlich die Option, nicht mehr die Riffelung des Reifens (die eine Art Formschluss mit dem Dynamorädchen bildet), sondern den reinen Reibschluss auf der Felgenflanke zur Leistungsübertragung zu nutzen. Der durch das erfindungsgemäße Befestigungssystem gut dosierte Anpressdruck reicht dazu vollkommen aus. Vorteilhaft ist hier, dass die Felge im Gegensatz zum Reifen praktisch keine Formabweichungen hat und dementsprechend erheblich sauberer läuft, dass sich kaum Schmutz ansammelt (der auf dem Reifen wie ein Schmierfilm wirkt) und sie selbst bei Regen und mäßigem Schneefall relativ trocken bleibt. Wegen der geringen Auflagefläche hebt der O-Ring selbst bei strömendem Regen nicht durch Aquaplaningeffekte ab. Ein korrekt eingebauter erfindungsgemäßer Felgendynamo hat einen turbinenartigen Lauf, erzeugt ein kaum wahrnehmbares Geräusch und bewegt sich nur dann in seiner Aufhängung, wenn die Felge einen Seitenschlag hat.

Ausführungsbeispiele der Erfindung sind in den Zeichnungen dargestellt und werden im Folgenden näher beschrieben. Es zeigen
- Fig. 1: einen axialen Längsschnitt durch den Fahrraddynamo;
- Fig. 2: zwei axiale Teilschnitte durch den Außenläufer in zwei unterschiedlichen Konstruktionen;
- Fig. 3: Schaltungsanordnungen bei Anschluss des Dynamos an einen Fahrradscheinwerfer;
- Fig. 4: eine Seitenansicht des Dynamos mit Teilen zum Befestigen am Fahrrad im Teilschnitt.

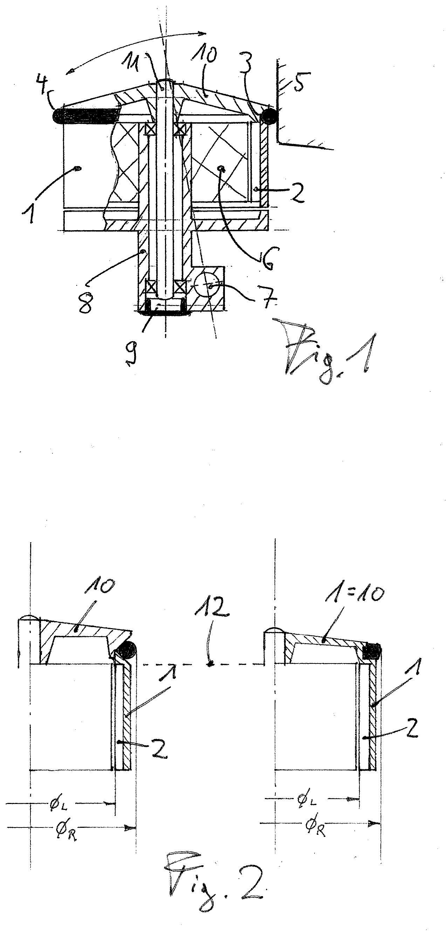

Der Dynamo hat erfindungsgemäß eine klare Funktionstrennung zwischen Stromerzeugung und Strom- bzw. Leistungsregelung und ist als vielpoliger Außenläufer-Generator ausgeführt. Er besteht (siehe Fig. 1) aus einem rotierenden Magnetrückschlussring 1, auf dessen Innenseite sich eine gerade Anzahl von abwechselnd gepolten Neodyn-Hochleistungsmagneten 2 befindet und der außen eine umlaufende Nut 3 hat, in der ein O-Ring 4 liegt. Über eine auf das Dynamogehäuse 8 wirkende Torsionsfeder wird die rotierende Glocke mit dem O-Ring gegen die Felge 5 gedrückt. Zur Minimierung des magnetischen Rastmoments hat das feststehende Blechpaket 6 eine Anzahl von Nuten/Polschenkeln, die von der Anzahlt der Magnete abweicht. Die auf maximale Wechselspannung ausgelegte Wicklung besteht aus einem durchlaufenden Draht, der in zyklisch abwechselndem Drehsinn auf die Polschenkel aufgewickelt ist, wobei je nach Polzahl jeder dritte, vierte, fünfte oder sechste Polschenkel nicht bewickelt wird.

Ein auf den Dynamo abgestimmtes, flexibles Befestigungssystem ermöglicht die nachträgliche Montage an unterschiedlichen Stellen (Gabel bzw. Tauchrohr von Federgabeln, Rahmenstrebe etc.) ohne mechanische Bearbeitung des Rahmens. Ein speziell für den Anbau an den Sockel von Felgenbremsen entwickelter Adapter ist extrem leicht, steif und problemlos zu montieren.

Der Dynamo kann umso leichter und kompakter gebaut werden, je kleiner das Durchmesserverhältnis von Reibrad zu Luftspalt ist (Φ_{R}/Φ_{L}). Zur Minimierung des Abrolldurchmessers ((Φ_{R} in Fig. 2) lässt man erfindungsgemäß einen Großteil des Ringquerschnitts im Rotor des Außenläufers verschwinden. Das ist nur oberhalb der Magnetebene 12 möglich. Die Stelle, an der man das bei geteilter Bauweise (Fig. 2 links) besonders gut verwirklichen kann, liegt im Bereich der Trennfuge zwischen Alu-Rotordeckel 10 und Stahl-Magnetrückschlussring 1. Bei Massenfertigung kann es günstiger sein, die Rotorglocke aus einem Stück zu fertigen (Fig. 2 rechts) und den O-Ring durch ein speziell geformtes Elastomerbauteil zu ersetzen. Falls unbedingt nötig kann man das Radienverhältnis Φ_{R}/Φ_{L} sogar <1 machen, indem man oberhalb der Rotorglocke - ähnlich wie beim klassischen Seitenläufer - einen Flaschenhals anbringt, der den O-Ring trägt.

Erfindungsgemäß muss die Zahl der Ständernuten von der Zahl der Magnete unbedingt abweichen, da anderenfalls ein erhebliches magnetisches Rastmoment entsteht, das durch Reibschluss kaum zu überwinden ist. Da die Magnete abwechselnd in Nord und Südrichtung von innen in den Magnetrückschlussring eingeklebt werden, ist ihre Anzahl stets eine gerade Zahl (z. B. 6, 8, 10, 12, 14 etc.), während die Zahl der Nuten (bzw. Polschenkel) im Blechpaket sowohl gerade als auch ungerade sein kann.

Damit der Dynamo besonders klein und leicht gebaut werden kann, ist er mit modernen Hochleistungsmagneten (z. B. Neodyn) bestückt. Eine Alternative besteht in vielpolig aufmagnetisierten Ferritringen, wie sie z. B. in den Antrieben von CD-ROM-Laufwerken verwendet werden. Diesem Kostenvorteil in der Massenproduktion steht ein höheres Gewicht entgegen. Ideal sind folglich vielpolig aufmagnetisierte Neodynringe.

Die Spulen auf dem Blechpaket sind in Lage und Drehsinn (Wickelrichtung) entsprechend zur magnetischen Durchflutung angeordnet, um aus gegebener Baugröße ein Maximum an Spannung zu erzeugen. Wenn der Dynamo als (1-phasige) Wechselstrommaschine gebaut wird, wird vorgeschlagen, je nach Polzahl jeden dritten, vierten, fünften oder sechsten Polschenkel nicht zu bewickeln. Sobald Beleuchtungsanlagen mit Drehstromeingang angeboten werden, wird der Dynamo auch in Drehstromversion mit den üblichen Wicklungsanordnungen gebaut, um dabei Wirkungsgrade über 90 % zu erreichen.

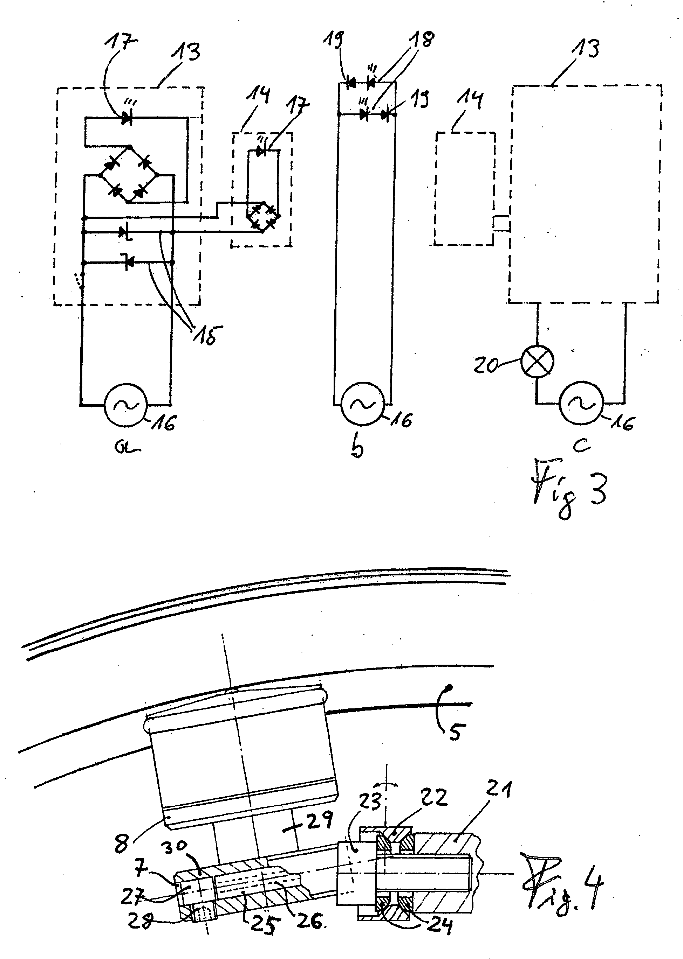

Die in der StVZO geforderte Dynamokennlinie geht von der Prämisse aus, dass jeder beliebige Dynamo mit jedem beliebigen Scheinwerfer kombinierbar sein muss, d. h. es müssen weiterhin Glüh- und Halogenbirnen berücksichtigt werden. Unter dem Gesichtspunkt der Effizienz, der Zuverlässigkeit und Langlebigkeit scheiden diese traditionellen Leuchtmittel aber aus und es wird vorgeschlagen, die elektrischen Eigenschaften des Dynamos ausschließlich an den Betrieb mit modernen LED-Scheinwerfern anzupassen. Diese erzeugen bei gleichem Stromverbrauch ein Vielfaches an Licht, haben eine Spannungsbegrenzung serienmäßig eingebaut und erzeugen bereits im Teillastbereich, d. h. bei Unterspannung mehr Licht als Glühbirnen im optimalen Arbeitspunkt. Der erfindungsgemäße Dynamo sollte nur an geeigneten bzw. geprüften LED-Lichtanlagen betrieben werden. Der Scheinwerfer (13 in Fig. 3a) benötigt einen ausreichend dimensionierten Überspannungsschutz an den auch das Rücklicht 14 angekoppelt wird. Nach üblichem Verfahren werden zwei antiparallel geschaltete Zenerdioden 15 verwendet, die ab einem bestimmten Spannungsniveau (d. h. bei außergewöhnlich hoher Geschwindigkeit) leitend werden, den Dynamo 16 quasi kurzschließen und die LED 17 somit vor Überspannung schützen. Überschussenergie wird also in Wärme umgewandelt und über Kühlkörper abgegeben. Von Vorteil ist auch, wenn zwei antiparallel geschaltete und kräftig überdimensionierte Leuchtdioden (18 in Fig. 3b) selbst als "Überspannungsschutz" verwendet werden. Dies hat den Vorteil, dass mit zunehmendem Tempo nicht nur die Dynamoleistung, sondern auch der Lichtstrom weiter kräftig ansteigt - ein durchaus erwünschter Effekt. Wegen der schlechten Sperrwirkung von LEDs sind hier zusätzliche Sperrdioden 19 eingebaut.

Um ein übermäßiges Ansteigen der Ströme zu verhindern, wird vorgeschlagen, den Dynamo "weich" anzukoppeln: Im einfachsten Fall reicht es, den Dynamo selbst durch vergrößern des Luftspalts "weich" zu machen, was allerdings auf Kosten seiner Leistungsdichte geht. Alternativ kann ein Kaltleiter (20 in Fig. 3c) in den Stromkreis eingebaut werden: Bei Normaltempo bleibt er kalt und leitet den Strom nahezu verlustfrei durch. Erst wenn bei hohem Tempo der Überspannungsschutz den Strom ansteigen lässt, heizt sich der Kaltleiter auf, erhöht seinen ohmschen Widerstand auf ein Vielfaches und begrenzt den Strom. Als Kaltleiter eignen sich 12V/20W Halogenbirnen, die bei dieser Verwendung nur minimal beansprucht werden. Durch Kombination von weichem Dynamo mit Kaltleiter lassen sich Geschwindigkeiten bis 100 km/h beherrschen, was bei Talfahrten von voll verkleideten Liegerädern angeblich vorkommen soll.

Besonders elegant lässt sich der Dynamo direkt am Sockel (21 in Fig. 4) einer Felgenbremse montieren: Dazu entfernt man die Halteschraube der Bremse und ersetzt sie durch eine etwas längere, durch den Befestigungsklotz 22 bereits durchgesteckte Schraube 23.

Eine genaue Winkeljustierung der Dynamoachse wird hier durch zwei Kugelschalen 24 ermöglicht, die auf einer 45°-Senkung im Befestigungsklotz anliegen. Obwohl diese Halterung nur wenige Gramm wiegt ist sie extrem steif.

Zur Befestigung des Dynamos an Gabeln oder Rahmenstreben wird eine spezielle Befestigungsplatte verwendet. Die Platte hat ein Gitter aus Bohrungen, um die Befestigung mittels durchgestrecktem Gewindedrahtbügel und Muttern an unterschiedlichen Rohrdurchmessern von Gabeln oder Tauchrohren am Vorderrad bzw. an einer Rahmenstrebe bei Hinterradeinbau zu ermöglichen. Sie enthält im oberen Teil eine durchlaufende Längsbohrung, um das Röhrchen 25 aufzunehmen. Die Einstellung der Dynamoposition erfolgt durch Auswahl der Bohrungen und entsprechendes Kippen der Platte relativ zur Strebe. Die dem Dynamo gegenüberliegende Stirnfläche der Platte hat zwei Stifte oder/und Kerben, in die die abgewinkelte Torsionsfeder einrasten kann, wobei in einer Rastposition der Dynamo abgeklappt ist und in der anderen gegen die Felge gedrückt wird.

Das Dynamogehäuse 8 ist am unteren Ende mit seiner durchlaufenden Bohrung 7 auf ein Röhrchen 25 aufgesteckt, in dem sich ein Torsionsstab 26 (gestrichelt dargestellt) befindet. Gehäusebohrung und Röhrchen bilden das Gelenk, um das der Dynamo geschwenkt werden kann, um abgeklappt bzw. angepresst zu werden. Das gestauchte freie Ende 27 des Torsionsstabs kann über eine Madenschraube 28 mit dem Dynamogehäuse torsionsfest fixiert werden. Über den Abstand in weggeklappter Position wird der Anpressdruck des Dynamos eingestellt. Die eingangs erwähnte Bohrung 7 im Dynamogehäuse 8 kann senkrecht (wie gezeichnet) oder parallel zur Hauptachse angeordnet sein, sollte aber immer einen leichten Seitenversatz haben, um den seitlichen Abstand von der Felge anpassen zu können, d. h. der Dynamo kann auf Umschlag montiert werden.

Eine hermetische Abdichtung ist bei dieser Bauart weder sinnvoll noch notwendig, denn eindringende Nässe kann jederzeit nach unten abfließen und die Verlustwärme trocknet den Dynamo bei jeder Benutzung gründlich aus. Abgeschlossene Gehäuse haben häufig Probleme mit eingeschlossenem Kondenswasser, das einen permanent wirkenden Korrosionsprozess provozieren kann. Wenn Blechpaket und Wicklung im Tauchbad durchtränkt sind, sollte das Innenleben des Dynamos gegen Vibrationen und Korrosion hinreichend geschützt sein. Bei Autolichtmaschinen liegt die Wicklung auch teilweise frei und kann vom Dampfstrahler erwischt werden. Magnetrückschlussring und auch die Magnete selbst haben eine korrosionsfeste Oberflächenbeschichtung. Einzig das obere Kugellager verbleibt als mögliche Schwachstellen. Wegen der Einbaulage oben in der Glocke ist es aber ohnehin nur gering exponiert und ist in Edelstahlausführung und mit berührungsloser Abdeckung (Kurzzeichen : ZZ) ausreichend geschützt. Das untere Lager wird durch einen Stopfen 9 im Gehäuse gekapselt. Um den Dynamo komplett resistent zu machen, wird ein an der Achse anliegender Wellendichtring unmittelbar über dem oberen Lager angeordnet. Wenn der Dynamo nur gelegentlich benutzt wird, können korrosionsfeste Gleitlager verwendet werden.

Durch eine konsequente Funktionstrennung zwischen Stromerzeugung und Leistungsregelung ist ein speziell auf den Betrieb mit LED-Scheinwerfern abgestimmter Dynamo in seinem Wirkungsgrad soweit verbessert, dass seine Bremswirkung selbst bei perfekter Fahrbahnausleuchtung unterhalb von einem Newton liegt (entspricht einer Steigung von ca. 1:900) und damit unterhalb der Wahrnehmungsschwelle.

Die Bauweise des Dynamos als vielpoliger Außenläufer macht ihn äußerst kompakt und leicht (unter 60 Gramm), womit er sich besonders auch für den Einbau in Sport- und Rennräder eignet. Die geringe mechanische Leistungsaufnahme erlaubt den Antrieb durch Reibschluss auf die Felge, wodurch ein besonders ruhiger und geräuscharmer Lauf erzielt wird. Ein ausgeklügeltes Befestigungssystem ermöglicht nachträgliche Montage an nahezu allen gängigen Fahrradtypen.

## Patentansprüche

1. Fahrraddynamo mit einem Außenläufer der innenseitig mehrere Permanentmagnete trägt, die in der inneren stationären Statorwicklung eine elektrische Spannung erzeugen, **dadurch gekennzeichnet, dass** der zylindrische Außenmantel (1) des Außenläufers einen elastischen Ring (4) trägt zur reibschlüssigen Anlage an der Felge (5) des Fahrrad-Rades und dass der Außenmantel (1) eine koaxiale Ringnut (3) aufweist oder mit einem den Außenmantel abschließenden Rotordeckel (10) bildet, in der der elastische Ring (4) insbesondere ein O-Ring einliegt und gegenüber dem Außenmantel (1) vorsteht.

2. Fahrraddynamo nach Anspruch 1, **dadurch gekennzeichnet, dass** der Stator auf einer Seite des Außenläufers eine insbesondere koaxial vorstehende Erweiterung aufweist, die an einem zur Dynamoachse quer angeordneten Halteteil befestigt ist, das um eine quer zur Dynamoachse angeordnete Drehachse gegen Federdruck verschwenkbar ist, wobei durch eine Feder der Dynamo mit dem elastischen Ring (4) gegen die Felge (5) gedrückt wird.

3. Fahrraddynamo nach Anspruch 2, **dadurch gekennzeichnet, dass** das Halteteil eine Längsbohrung (7) aufweist, in der ein Torsionsstab (26) als Federelement einliegt.

4. Fahrraddynamo nach Anspruch 2 oder 3, **dadurch gekennzeichnet, dass** ein Ende des Halteteils (30) über ein Kugelgelenk oder ein Kugelschalengelenk (24) mit dem Fahrrad insbesondere mit dem Sockel (21) einer Felgenbremse verbunden ist.

5. Fahrraddynamo nach einem der Ansprüche 2 bis 4, **dadurch gekennzeichnet, dass** eine Befestigungsplatte vorgesehen ist, in der der Torsionsstab (26) einliegt und die insbesondere über einen Bügel und Muttern am Fahrrad befestigbar ist.

6. Fahrraddynamo nach Anspruch 5, **dadurch gekennzeichnet, dass** die Befestigungsplatte zur optimalen Positionierung des Halteröhrchens mehrere Reihen von mindestens vier Bohrungen hat, um die Montage an unterschiedliche Rohrdurchmesser in verschiedenen Neigungswinkeln zu ermöglichten.

7. Fahrraddynamo nach einem der vorherigen Ansprüche, **dadurch gekennzeichnet, dass** in dem Stromkreis der vom Dynamo erzeugten Spannung ein Kaltleiter insbesondere eine Halogenbime einliegt, der bei hohen Dynamodrehzahlen sich aufheizt und hierdurch seinen ohmschen Widerstand erhöht.

8. Fahrraddynamo nach einem der vorherigen Ansprüche, **dadurch gekennzeiichnet,** dass zur Gewichtsreduktion der Deckel des Rotors aus einem Leichtbauwerkstoff insbesondere Aluminium besteht und die umlaufende Ringnut (3) zur Aufnahme des O-Rings (4) durch eine Y-förmige Trennfuge zwischen dem Aludeckel und dem stählernen Magnetrückschlussring gebildet wird.

9. Fahrraddynamo nach einem der vorherigen Ansprüche, **dadurch gekennzeichnet, dass** der geraden Anzahl von Einzelmagneten (2), die in dem Magnetrückschlussring eingeklebt sind, eine davon abweichende kleinere Anzahl von Nuten bzw. Polschenkeln gegenübersteht.

10. Fahrraddynamo nach einem der vorherigen Ansprüche, **gekennzeichnet durch** das Speisen von LED-Leuchten.

11. Fahrraddynamo nach einem der vorherigen Ansprüche, **gekennzeichnet durch** eine Funktionstrennung zwischen Stromerzeugung und Leistungsregelung, um einen auf den Betrieb mit LED-Scheinwerfern abgestimmter Dynamo in seinem Wirkungsgrad derart verbessert zu erhalten, dass seine Bremswirkung sehr gering ist.

12. Fahrraddynamo nach einem der vorherigen Ansprüche, **dadurch gekennzeichnet, dass** eine Wicklungsanordnung zur Erzeugung von Drehstrom vorgesehen ist.

## Claims

1. Bicycle dynamo with an external rotor bearing carrying on the inside a plurality of permanent magnets, which generate an electrical voltage in the internal stationary stator winding, **characterized in that** the cylindrical outer casing (1) of the external rotor bears an elastic ring (4) to achieve a frictional contact on the rim (5) of the bicycle wheel and wherein the outer casing (1) exhibits a coaxial annular groove (3) or forms said groove with a rotor cover (10) enclosing the outer casing , with the elastic ring (4), particularly an O-ring, being situated in said groove and protruding from the outer casing (1).

2. Bicycle dynamo according to claim 1 **characterized in that** the stator on one side of the external rotor exhibits a special coaxially protruding extension (29) that is fastened to a holder (30) arranged perpendicularly to the axis of the dynamo, with said holder being capable of tilting under spring tension about a rotational axis perpendicular to the dynamo axis, whereat by means of a spring the dynamo with the elastic ring (4) is pressed against the rim (5).

3. Bicycle dynamo according to claim 2 **characterized in that** the holder (30) has a longitudinal drilled hole (7) in which a torsion bar spring (26) is present as a spring element.

4. Bicycle dynamo according to claim 2 or 3 **characterized in that** one end of the holder (30) via a ball joint or ball and socket joint is connected to the bicycle, in particular with the boss (21) of a rim brake.

5. Bicycle dynamo according to one of claims 2 to 4 **characterized in that** the holder (30) is formed by a fastening plate in which the torsion bar spring (26) is present and that can be fastened to the bicycle particularly by means of a bracket and nuts.

6. Bicycle dynamo according to claim 5 **characterized in that** the fastening plate for optimal positioning of the holding tube has several rows of at least four drilled holes to facilitate mounting on different tube diameters at various angles of inclination.

7. Bicycle dynamo according to one of the preceding claims **characterized in that** in the electrical circuit of the voltage which is generated by the dynamo a resistor is present having positive temperature coefficient, particularly a halogen bulb, , with said resistor heating up and thus raising its ohmic resistance when the dynamo rotates at high speeds.

8. Bicycle dynamo according to one of the preceding claims **characterized in that**, for purposes of weight reduction, the cover of the rotor consists of a lightweight construction material, particularly aluminum, and the circumferential annular groove (3) for accommodating the 0-ring (4) is formed by a Y-shaped joint between the aluminum cover and the steel magnetic feedback ring.

9. Bicycle dynamo according to one of the preceding claims **characterized in that** the even number of individual magnets (2) cemented into the magnetic feedback ring faces a differing lower number of slots or pole shanks.

10. Bicycle dynamo according to one of the preceding claims **characterized in that** it feeds LED lamps.

11. Bicycle dynamo according to one of the preceding claims **characterized in that** the functions of electricity generation and power control are separated in order to maintain an improvement in the efficiency of a dynamo adapted for operation with LED lights in such a way that its braking effect is very small.

12. Bicycle dynamo according to one of the preceding claims **characterized in that** it has a winding arrangement for producing three-phase current.

## Revendications

1. Dynamo d'éclairage de bicyclette comportant un rotor extérieur portant à l'intérieur plusieurs aimants permanents qui génèrent dans l'enroulement statorique stationnaire interne une tension électrique, **caractérisée en ce que** l'enveloppe extérieure cylindrique (1) du rotor extérieur porte un anneau élastique (4) en vue de l'appui à friction contre la jante (5) de la roue de la bicyclette et que l'enveloppe extérieure (1) présente ou forme avec un couvercle de rotor (10) fermant l'enveloppe extérieure une rainure annulaire coaxiale (3) dans laquelle l'anneau élastique (4), notamment un joint torique, est logé et fait saillie par rapport à l'enveloppe extérieure (1).

2. Dynamo d'éclairage de bicyclette selon la revendication 1, **caractérisée en ce que** le stator présente sur un côté du rotor extérieur une extension (29) faisant saillie, notamment de manière coaxiale, qui est fixée à une pièce de maintien (30) disposée transversalement par rapport à l'axe de la dynamo et pivotante à l'encontre d'une pression de ressort autour d'un axe de rotation disposé transversalement par rapport à l'axe de la dynamo, la dynamo étant poussée par un ressort avec l'anneau élastique (4) contre la jante.

3. Dynamo d'éclairage de bicyclette selon la revendication 2, **caractérisée en ce que** la pièce de maintien (30) présente un alésage longitudinal (7) dans lequel une barre de torsion (26) est logée en tant qu'élément élastique.

4. Dynamo d'éclairage de bicyclette selon la revendication 2 ou 3, **caractérisée en ce qu'**une extrémité de la pièce de maintien (30) est reliée par une articulation à rotule ou une articulation à rotule et coupelle (24) à la bicyclette, notamment au tasseau (21) d'un frein sur jante.

5. Dynamo d'éclairage de bicyclette selon l'une des revendications 2 à 4, **caractérisée en ce qu'**une plaque de fixation est prévue, dans laquelle est disposée la barre de torsion (26) et qui peut être fixée à la bicyclette, notamment par un étrier et des écrous.

6. Dynamo d'éclairage de bicyclette selon la revendication 5, **caractérisée en ce que** la plaque de fixation destinée au positionnement optimal du tube de maintien présente plusieurs rangées d'au moins quatre alésages afin de permettre le montage sur différents diamètres de tube selon différents angles d'inclinaison.

7. Dynamo d'éclairage de bicyclette selon l'une des revendications précédentes, **caractérisée en ce qu'**est disposée dans le circuit électrique de la tension générée par la dynamo une thermistance CTP, notamment une ampoule halogène, qui s'échauffe lorsque la dynamo tourne à grande vitesse et augmente ainsi sa résistance ohmique.

8. Dynamo d'éclairage de bicyclette selon l'une des revendications précédentes, **caractérisée en ce qu'** afin de réduire le poids, le couvercle du rotor est en matériau léger, notamment de l'aluminium, et que la rainure annulaire périphérique (3) recevant le joint torique (4) est constituée par une fente de séparation en forme de Y entre le couvercle en alu et la bague de reflux magnétique en acier.

9. Dynamo d'éclairage de bicyclette selon l'une des revendications précédentes, **caractérisée en ce qu'** au nombre pair d'aimants individuels (2) qui sont collés dans la bague de reflux magnétique correspond un nombre différent, inférieur, de rainures respectivement de branches polaires.

10. Dynamo d'éclairage de bicyclette selon l'une des revendications précédentes, **caractérisée par** l'alimentation de lampes à LED.

11. Dynamo d'éclairage de bicyclette selon l'une des revendications précédentes, **caractérisée par** une séparation fonctionnelle entre la production de courant et la régulation de la puissance destinée à obtenir une dynamo adaptée au fonctionnement avec des phares à LED ayant un rendement à tel point amélioré que son effet de freinage est très faible.

12. Dynamo d'éclairage de bicyclette selon l'une des revendications précédentes, **caractérisée en ce qu'**une configuration d'enroulement pour la production de courant alternatif est prévue.
